# EUROPÄISCHE PATENTANMELDUNG

(11) **EP 1 211 017 A1**
(43) Veröffentlichungstag der Anmeldung: **05.06.2002**
(21) Anmeldenummer: 00126601.4
(22) Anmeldetag: 04.12.2000
(51) Int. Cl.: B23Q 3/12, B23Q 16/10, B23Q 1/70, B23Q 37/00

(54) **In einem Spindelgehäuse einer Bearbeitungsmaschine drehbar gelagerte Werkzeugspindel**

(71) Anmelder: Maschinenfabrik Berthold Hermle Aktiengesellschaft, D-78559 Gosheim (DE)
(72) Erfinder: Schwörer, Tobias, Dipl.-Ing. (FH), 78598 Königsheim (DE); Bernhard, Franz-Xaver, 78549 Spaichingen (DE)
(74) Vertreter: Vetter, Hans, Dipl.-Phys. Dr.

(57) **Zusammenfassung**

Es wird eine in einem Spindelgehäuse (12) einer Bearbeitungsmaschine drehbar gelagerte Werkzeugspindel (10) zum Drehantrieb von daran befestigten Bearbeitungswerkzeugen, wie Bohrer und Fräser, vorgeschlagen. Um auch eine Drehbearbeitung realisieren zu können, ist ein mit Drehmeißeln (18) bestückbarer Drehrevolver (17) an einem konzentrisch mit der Werkzeugspindel (10) verbindbaren Antriebsteil (16) drehfest und axial verschiebbar gelagert und mittels wenigstens eines Stellglieds (29) in axialer Richtung relativ zum Spindelgehäuse (12) verschiebbar. Zwischen dem Drehrevolver (17) und dem Spindelgehäuse (12) ist eine Drehverzahnung vorgesehen, wobei in einer Einrückstellung des Stellglieds (29) die Drehverzahnung im Eingriff und in einer Ausrückstellung außer Eingriff steht. Hierdurch kann der Drehrevolver in der Ausrückstellung mittels der Werkzeugspindel positioniert werden, und in der Einrückstellung kann die Drehbearbeitung erfolgen. Dann nimmt das Spindelgehäuse (12) die auftretenden Bearbeitungskräfte auf, die somit nicht auf die Werkzeugspindel (10) einwirken können.

## Beschreibung

Die Erfindung betrifft eine in einem Spindelgehäuse einer Bearbeitungsmaschine drehbar gelagerte Werkzeugspindel zum Drehantrieb von daran befestigten Bearbeitungswerkzeugen, insbesondere Bohrer und Fräser.

Derartige Bearbeitungsmaschinen oder Bearbeitungszentren waren in bisherigen Ausführungen überwiegend als reine Bohroder Fräsmaschinen ausgelegt, jedoch sind kombinierte Bearbeitungszentren mehr und mehr im Vormarsch, in denen neben Bohr- und Fräsvorgängen auch die Drehbearbeitung von Werkstücken möglich ist.

Aus der DE 19739512 ist eine kombinierte Dreh- und Fräsmaschine bekannt. Zum Antrieb der Fräswerkzeuge und zur Positionierung von an einem Drehrevolver angeordneten Drehmeißeln sind separate Drehantriebe vorgesehen. Dies liegt nicht zuletzt daran, dass zum Positionieren der Drehmeißel sehr geringe Drehzahlen und zum Antrieb der Fräswerkzeuge wesentlich höhere Drehzahlen erforderlich sind.

Will man sowohl die Fräswerkzeuge als auch die Drehmeißel mittels derselben Antriebsvorrichtung antreiben, so ist eine Drehzahlumschaltung erforderlich. Ein derartiger Drehantrieb mit umschaltbarer Drehzahl ist prinzipiell aus der DE 19739511 bekannt. Allerdings besteht noch ein wesentliches Problem darin, dass während der Drehbearbeitung über den zuvor durch eine Drehbewegung positionierten Drehmeißel große Drehmomente übertragen werden, die die Lager der Werkzeugspindel bzw. eine Festhalteeinrichtung für die Werkzeugspindel aufnehmen müßten, was einen schnellen Verschleiß zur Folge hätte, insbesondere auch infolge gelegentlich auftretender Drehmomentschwankungen.

Eine Aufgabe der vorliegenden Erfindung besteht darin, eine in einem Spindelgehäuse drehbar gelagerte Werkzeugspindel für Bohr- und Fräsvorgänge zu schaffen, die auch zur Positionierung von Drehwerkzeugen geeignet ist und während der Drehvorgänge keine durch die Bearbeitung erzeugten Momente aufnehmen muss.

Diese Aufgabe wird erfindungsgemäß dadurch gelöst, dass ein mit Drehmeißeln bestückbarer Drehrevolver an einem konzentrisch mit der Werkzeugspindel verbindbaren Antriebsteil drehfest und axial verschiebbar gelagert ist und mittels wenigstens eines Stellglieds in axialer Richtung relativ zum Spindelgehäuse verschiebbar ist, und dass eine Drehverzahnung zwischen dem Drehrevolver und dem Spindelgehäuse oder einem damit starr verbundenen Teil vorgesehen ist, wobei in einer Einrückstellung des Stellglieds die Drehverzahnung im Eingriff und in einer Ausrückstellung außer Eingriff steht.

Die erfindungsgemäße Anordnung hat insbesondere den Vorteil, dass in der Ausrückstellung des Stellglieds eine Positionierung des Drehrevolvers mittels der Werkzeugspindel erfolgen kann und dass in der Einrückstellung der Drehrevolver mittels des Stellglieds drehfest am Spindelgehäuse fixiert ist, so dass dieses die bei der Drehbewegung entstehenden Drehmomente aufnimmt und die Werkzeugspindel momentenfrei bleibt. Dennoch ist eine sehr schnelle und exakte Drehpositionierung möglich, da durch die Drehverzahnung fest vorgegebene Drehwinkelpositionierungen möglich sind. Es wird nur ein einziger Antriebsmotor zur Positionierung des Drehrevolvers bzw. der Drehmeißel und zum Antrieb von Bohr-, Fräs-, Schleif- oder sonstigen Werkzeugen benötigt.

Durch die in den Unteransprüchen aufgeführten Maßnahmen sind vorteilhafte Weiterbildungen und Verbesserungen der im Anspruch 1 angegebenen Werkzeugspindelanordnung möglich.

Das Antriebsteil besitzt in vorteilhafter Weise einen in eine Schaftaufnahme der Werkzeugspindel einsetzbaren und dort fixierbaren Schaft, der insbesondere dem üblichen Schaft für Fräswerkzeuge oder sonstige Werkzeuge entspricht, so dass diese Werkzeuge und ein oder mehrere Drehrevolver schnell und einfach an der Werkzeugspindel ausgetauscht werden können. Dabei bildet das Antriebsteil zweckmäßigerweise einen Bestandteil des Drehrevolvers, wobei die Verschiebung des Antriebsteils gegen den übrigen Bereich des Drehrevolvers gegen die Kraft von Federmitteln erfolgt, so dass zum einen gewährleistet ist, dass beim Ansetzen des Drehrevolvers an die Werkzeugspindel der Schaft des Antriebsteils sicher in die Schaftaufnahme gelangt, wobei zusätzlich gewährleistet ist, dass sich die Ausrückstellung automatisch einstellt, wenn das Stellglied nicht betätigt ist.

Um den Drehrevolver drehfest und axial verschiebbar am Antriebsteil zu befestigen, ist eine formschlüssig das Antriebsteil umgreifende und daran axial verschiebbare Mitnahmescheibe mit einem Hauptteil des Drehrevolvers starr verbunden, so dass diese als Verschleißteil leicht auswechselbar ist. Zur exakten Positionierung kann diese Mitnahmescheibe auch besonders präzise gefertigt sein.

Das wenigstens einen Stellzylinder, insbesondere hydraulischen Stellzylinder, aufweisende Stellglied ist zweckmäßigerweise im Spindelgehäuse oder einem starr damit verbundenen Teil angeordnet, wobei ein am freien Ende der wenigstens einen Kolbenstange des Stellglieds angeordnetes Kopfteil in einem Ringkanal des Drehrevolvers bewegbar ist und die Ebene des Ringkanals senkrecht zur Drehachse der Werkzeugspindel ausgerichtet ist. Hierdurch wird eine Drehbewegung des Drehrevolvers relativ zum Spindelgehäuse in der Ausrückstellung möglich. Durch die Anordnung des Stellzylinders im Spindelgehäuse ist eine einfache Fluidikversorgung möglich.

Die wenigstens eine Kolbenstange des Stellglieds greift über einen Ringschlitz in den Ringkanal ein, wobei die Schlitzbreite des Ringschlitzes kleiner als der Durchmesser des Kopfteils ist. Hierdurch kann das Stellglied den Drehrevolver an das Spindelgehäuse in der Einrückstellung anpressen. Selbstverständlich müssen entsprechend der Zahl der Kolbenstangen Einsetzbohrungen vorgesehen sein, um in einer bestimmten Winkelstellung das oder die Kopfteile in den Ringkanal einführen zu können.

In einer vorteilhaften konstruktiven Ausgestaltung besteht die Drehverzahnung aus wenigstens einem stirnseitigen Vorsprung am Spindelgehäuse oder an einem dem Spindelgehäuse zugewandten Bereich des Drehrevolvers, wobei dieser Vorsprung zum wahlweisen Eingriff in mehrere entsprechende Ausnehmungen am gegenüberliegenden anderen Teil ausgebildet ist, die im entsprechenden radialen Abstand angeordnet sind. Dabei ist der stirnseitige Vorsprung zweckmäßigerweise am Spindelgehäuse angeordnet.

Die Zahl und Winkelanordnung der Ausnehmungen entspricht der Zahl und Winkelanordnung der Drehmeißelaufnahmen am Drehrevolver, so dass die Drehmeißel jeweils exakt in der Bearbeitungsposition positioniert werden können.

Zur völligen Entlastung der Werkzeugspindel von Bearbeitungskräften stützt sich der Drehrevolver wenigstens in der Einrückstellung des Stellglieds radial und axial am Spindelgehäuse und/oder einem damit starr verbundenen Teil ab. Hierzu übergreift vorzugsweise ein rohrartiger Fortsatz des Drehrevolvers das Spindelgehäuse oder das damit starr verbundene Teil.

Zur Kühlung der Drehmeißel liegt die Mündung wenigstens einer axialen Kühlmittelleitung im Spindelgehäuse in der Einrückstellung des Stellglieds an der Mündung wenigstens einer axialen Kühlmittelleitung im Drehrevolver an, so dass in der eingerückten Arbeitsstellung des Drehrevolvers die Kühlmittelzufuhr zum Drehrevolver bzw. den Drehmeißeln gewährleistet ist. Dabei entspricht die Zahl und Winkelanordnung der Kühlmittelleitungen im Spindelgehäuse und/oder Drehrevolver vorzugsweise der Zahl und Winkelanordnung der Drehmeißelaufnahmen, so dass die Kühlmittelzufuhr auch in allen erforderlichen Winkelstellungen des Drehrevolvers gewährleistet ist.

Ein Ausführungsbeispiel der Erfindung ist in der Zeichnung dargestellt und in der nachfolgenden Beschreibung näher erläutert. Es zeigen:
- Fig. 1: eine Vertikalschnittdarstellung des Werkzeugaufnahmebereichs einer Werkzeugspindel mit angebrachtem Drehrevolver in der Ausrückstellung eines Stellglieds und
- Fig. 2: dieselbe Anordnung in der Einrückstellung des Stellglieds.

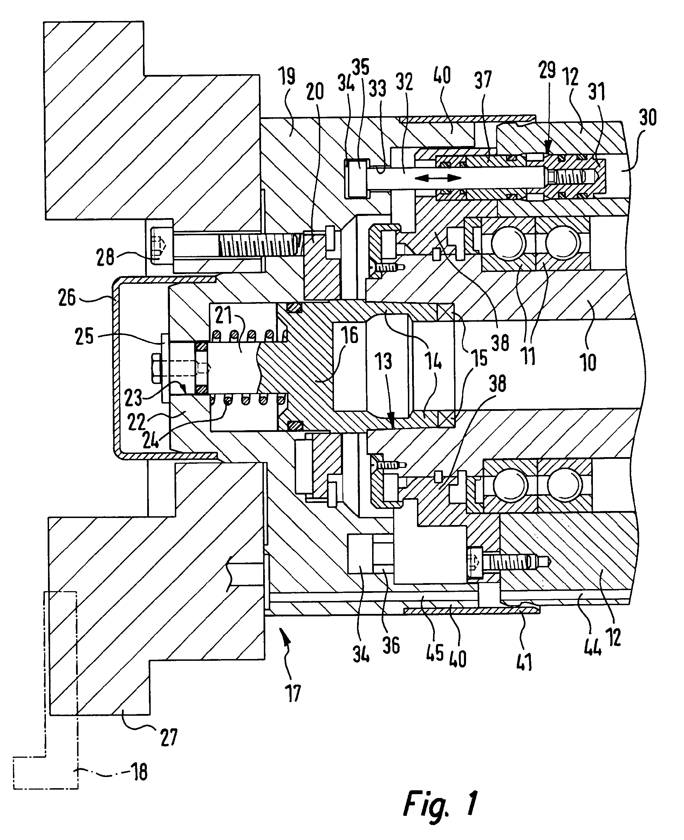

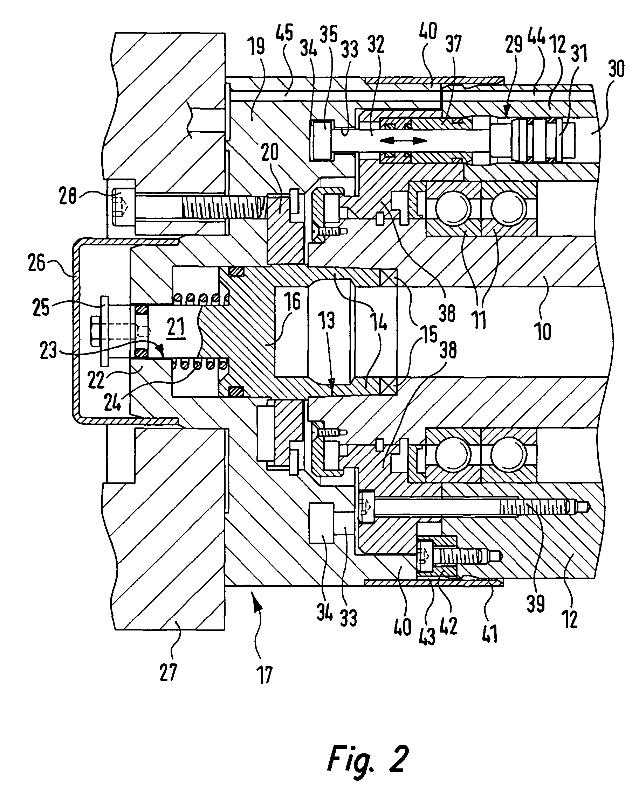

Gemäß den Darstellungen in den Fig. 1 und 2 ist eine Werkzeugspindel 10 bzw. Frässpindel mit Hilfe von Drehlagern 11 drehbar in einem Spindelgehäuse 12 gelagert. An der bearbeitungsseitigen Stirnseite besitzt die Werkzeugspindel 10 eine konische Aufnahme für Kegelhohlschäfte 14 von Werkzeugen. Die konische Aufnahme 13 ist als sogenannte HSK-Schnittstelle nach DIN 69063-1 für Kegelhohlschäfte nach DIN 69893 ausgebildet. Der erforderliche Spannsatz für die HSK-Schnittstelle ist zur Vereinfachung nicht dargestellt. Er dient dazu, den Kegelhohlschaft 14 des jeweiligen Werkzeugs in die konische Aufnahme 13 hinein und gegen einen Stirnmitnehmer 15 der HSK-Aufnahme zu ziehen bzw. zu pressen.

Anstelle einer HSK-Schnittstelle kann prinzipiell jede beliebige andere bekannte Schnittstelle zur Fixierung von Werkzeugen an einer Werkzeugspindel treten.

Die Aufnahme 13 an der Werkzeugspindel 10 dient üblicherweise zur Aufnahme von Bearbeitungswerkzeugen, wie Fräser, Bohrer, Schleifer oder dergleichen. Im vorliegenden Falle ist in die konische Aufnahme 13 der Kegelhohlschaft 14 eines im übrigen im wesentlichen zylindrischen Antriebsteils 16 eines Drehrevolvers 17 eingesetzt. Dieser Drehrevolver dient zur stirnseitigen Aufnahme mehrerer radial ausgerichteter Drehmeißel 18, von denen in Fig. 1 einer schematisch strichpunktiert dargestellt ist.

Eine an einem Hauptteil 19 des Drehrevolvers 17 fixierte Mitnahmescheibe 20 umgreift formschlüssig den aus der Werkzeugspindel 10 herausragenden zylindrischen Teil des Antriebsteils 16 und ist daran axial verschiebbar. Durch die Formschlüssigkeit der Mitnahmescheibe 20 wird eine Drehbewegung bzw. ein Drehmoment der Werkzeugspindel 10 über die Mitnahmescheibe 20 auf das Hauptteil 19 des Drehrevolvers 17 übertragen. Ein konzentrischer bolzenartiger Fortsatz 21 am zylindrischen Bereich des Antriebsteils 16 greift in einen topfförmigen Bereich 22 des Hauptteils 19 hinein und erstreckt sich durch eine Bohrung 23 des Bodens des topfförmigen Bereichs 22. Zwischen dem zylindrischen Bereich des Antriebsteils 16 und dem Boden des topfförmigen Bereichs 22 umgreift eine als Druckfeder ausgebildete Schraubenfeder 24 den bolzenartigen Fortsatz 21. Dieser besitzt an der gegenüberliegenden Seite des Bodens des topfförmigen Bereichs 22 eine angeschraubte Haltescheibe 25, die ein Herausziehen des bolzenartigen Fortsatzes 21 aus der Bohrung 23 verhindert. Das bolzenförmige Antriebsteil 16 kann somit gegen die Kraft der Schraubenfeder 24 in das Innere des topfförmigen Bereichs 22 hineingedrückt werden. Beim Anbringen des Drehrevolvers 17 an der Werkzeugspindel 10 bewirkt diese Schraubenfeder 24, dass der Kegelhohlschaft 14 des Antriebsteils 16 federnd in die konische Aufnahme 13 hineingedrückt werden kann. Eine topfartige Abdeckung 26 verhindert das Eindringen von Bearbeitungsrückständen und Flüssigkeiten von der Bearbeitungsseite her zum Antriebsteil 16 hin.

Eine ringartige Drehmeißelaufnahme 27, an der mehrere Drehmeißel fixierbar sind, ist mittels Halteschrauben 28 derart mit dem Hauptteil 19 verschraubt, dass der topfförmige Bereich 22 in die konzentrische Bohrung der Drehmeißelaufnahme 27 eingreift. Diese Drehmeißelaufnahme 27 ist im Ausführungsbeispiel einstückig ausgebildet, sie kann jedoch auch mehrstückig sein.

Zur axialen Verschiebung des Drehrevolvers 17 bzw. von dessen Hauptteil 19 relativ zur Werkzeugspindel 10 dient ein als hydraulischer Stellzylinder 29 ausgebildetes Stellglied. Hierzu besitzt das Spindelgehäuse 12 eine stirnseitig mündende Zylinderbohrung 30, in der ein Kolben 31 axial bewegbar ist. Seine Kolbenstange 32 erstreckt sich durch einen Ringschlitz 33 in einen Ringkanal 34 des Hauptteils 19 hinein. Am freien Ende der Kolbenstange 32 befindet sich ein Kopfteil 35 mit gegenüber dem Ringschlitz 33 größerem Durchmesser, das im wesentlichen einen dem Querschnitt des Ringkanals 34 entsprechenden Querschnitt besitzt. Zum Einführen des Kopfteils 35 in den Ringkanal 34 dienen entsprechende Einsetzbohrungen 36 an einer oder an mehreren bestimmten Winkelpositionen des Hauptteils 19. Eine die Kolbenstange 32 dichtend umgreifende rohrartige Zylinderabdichtung 37 ist zum Teil in der Zylinderbohrung 30 und zum Teil in einem ringartigen Abschlussteil 38 fixiert, das mittels Halteschrauben 39 an der Stirnseite des Spindelgehäuses 12 befestigt ist.

In den Fig. 1 und 2 sind infolge der Schnittdarstellung jeweils nur eine Halteschraube 28 und eine Halteschraube 39 dargestellt, wobei tatsächlich mehrere solcher Halteschrauben vorgesehen sind. Anstelle des einen dargestellten Stellzylinders 29 können auch mehrere über den Umfang verteilte derartige Stellzylinder treten. Weiterhin können anstelle von hydraulischen Stellzylindern auch pneumatische Stellzylinder oder andere bekannte Stellglieder treten, die auf anderen Arbeitsprinzipien beruhen. Der dargestellte hydraulische Stellzylinder 29 kann als doppeltwirkender Stellzylinder ausgebildet sein, jedoch genügt prinzipiell auch ein einfachwirkender Stellzylinder zum Heranziehen des Hauptteils 19 gegen die Stirnseite des Spindelgehäuses 12 gegen die Kraft der Schraubenfeder 24. Die Bewegung in der Gegenrichtung kann dann allein durch die Kraft der Schraubenfeder 24 erfolgen, wenn der Stellzylinder 29 deaktiviert wird.

Ein das Abschlussteil 38 umfangsseitig übergreifender rohrartiger Fortsatz 40 des Hauptteils 19, der einstückig angeformt ist, dient zur radialen Lagerung des Hauptteils 19 bzw. des Drehrevolvers 17 am Abschlussteil 38 und damit am Spindelgehäuse 12. Hierdurch werden bei der Bearbeitung auftretende radiale Kräfte nicht auf die Werkzeugspindel 10 übertragen, sondern von diesem Abschlussteil 38 bzw. dem Spindelgehäuse 12 aufgenommen. Dabei wird bei aktiviertem Stellzylinder 29 die Stirnseite des rohrartigen Fortsatzes 40 gegen die Stirnseite des Spindelgehäuses 12 gepresst, so dass auch bei der Bearbeitung auftretende axiale Kräfte vom Drehrevolver 17 auf das Spindelgehäuse 12 übertragen werden, so dass auch diese Kräfte nicht auf die Werkzeugspindel 10 einwirken können, die axial lediglich mittels der Schraubenfeder 24 federnd mit dem Hauptteil 19 des Drehrevolvers 17 verbunden ist.

Ein am Hauptteil 19 umfangsseitig fixiertes Schutzrohr 41 übergreift den im deaktivierten Zustand des Stellzylinders 29 gebildeten Ringspalt zwischen dem Hauptteil 19 und dem Spindelgehäuse 12 und verhindert dadurch ein Eindringen von Bearbeitungsrückständen, Schmutz oder dergleichen.

Zur Verzahnung des Drehrevolvers 17 mit dem Spindelgehäuse 12 bei aktiviertem Stellzylinder 29 ist eine einen Verzahnungsvorsprung bildende Passfeder 42 an der Stirnseite des Spindelgehäuses 12 angeschraubt. In bestimmten Winkelstellungen, die von der Anordnung der Drehmeißel 18 bzw. Drehmeißelaufnahmen abhängen, besitzt der rohrartige Fortsatz 40 des Hauptteils 19 des Drehrevolvers 17 entsprechende Verzahnungsausnehmungen bzw. Schlitzausnehmungen 43, von denen in Fig. 2 lediglich eine erkennbar ist, allerdings nicht sehr gut erkennbar ist. Die Zahl und Winkelanordnung der Schlitzausnehmungen 43 entspricht der Zahl und Winkelanordnung der Drehmeißel 18 bzw. Drehmeißelhalterungen. Dabei können auch mehrere Passfedern 42 mit entsprechenden Winkelabständen vorgesehen sein.

Zur Montage des Drehrevolvers 17 wird dieser mittels einer nicht dargestellten Werkzeugwechseleinrichtung aus einem Werkzeugmagazin entnommen, das beispielsweise auch andere Fräs-, Bohr- oder Schleifwerkzeuge enthalten kann. Durch die Werkzeugwechseleinrichtung wird der Drehrevolver 17 mit einem bestimmten Einsetzwinkel so eingesetzt, dass der Kegelhohlschaft 14 in die Aufnahme 13 eintaucht und gleichzeitig das Kopfteil 35 der Kolbenstange 32 durch die Einsetzbohrung 36 in den Ringkanal 34 gelangt. Sind beispielsweise vier Stellzylinder 29 über den Umfang verteilt, so muss eine entsprechend große Zahl von Einsetzbohrungen 36 in der entsprechenden Winkelanordnung vorgesehen sein. Die Fixierung des Kegelhohlschafts 14 in der Aufnahme 13 erfolgt mittels des nicht dargestellten Spannsatzes. Bei nicht aktivierten Stellzylindern 29 liegt die in Fig. 1 dargestellte Anordnung vor. Da die aus den Schlitzausnehmungen 43 und der Passfeder 42 bestehende Drehverzahnung in der Ausrückstellung ist, kann der Drehrevolver 17 mittels der Werkzeugspindel 10 positioniert werden. Ist die gewünschte Position erreicht, befindet sich also der jeweils gewünschte Drehmeißel 18 in der Bearbeitungsposition, so werden die Stellzylinder 29 aktiviert, wodurch der Drehrevolver 17 in die in Fig. 2 dargestellte Position gebracht wird. Dabei greift die Passfeder 42 in eine der Schlitzausnehmungen 43 ein, wodurch eine weitere Drehbewegung verhindert wird. Die Drehverzahnung befindet sich dann in der Einrückstellung.

Eine oder mehrere axial verlaufende Kühlmittelleitungen 44 im Spindelgehäuse 12 münden an dessen Stirnseite. In der in Fig. 2 dargestellten Einrückstellung liegen die Mündungen dieser Kühlmittelleitungen 44 dichtend an Mündungen von Kühlmittelleitungen 45 im Drehrevolver 17 an, die stirnseitig am rohrartigen Fortsatz 40 einerseits und andererseits an der Grenzfläche zwischen dem Hauptteil 19 und der Drehmeißelaufnahme 27 münden. Diese Kühlmittelleitungen 45 setzen sich dann in der Drehmeißelaufnahme 27 fort und erstrecken sich dann in nicht dargestellter Weise bis zu den Drehmeißeln 18 oder wenigstens zu demjenigen Drehmeißel, der sich in der Bearbeitungsposition befindet.

In einer einfacheren Ausführung können beispielsweise auch das Hauptteil 19 und die Drehmeißelaufnahme 27 zusammen einstückig ausgebildet sein. Dasselbe ist beim Spindelgehäuse 12 und dem Abschlussteil 38 möglich.

## Patentansprüche

1. In einem Spindelgehäuse einer Bearbeitungsmaschine drehbar gelagerte Werkzeugspindel zum Drehantrieb von daran befestigten Bearbeitungswerkzeugen, wie Bohrer und Fräser, **dadurch gekennzeichnet, dass** ein mit Drehmeißeln (18) bestückbarer Drehrevolver (17) an einem konzentrisch mit der Werkzeugspindel (10) verbindbaren Antriebsteil (16) drehfest und axial verschiebbar gelagert ist und mittels wenigstens eines Stellglieds (29) in axialer Richtung relativ zum Spindelgehäuse (12) verschiebbar ist, und dass eine Drehverzahnung (42, 43) zwischen dem Drehrevolver (17) und dem Spindelgehäuse (12) oder einem damit starr verbundenen Teil vorgesehen ist, wobei in einer Einrückstellung des Stellglieds (29) die Drehverzahnung (42, 43) im Eingriff und in einer Ausrückstellung außer Eingriff steht.

2. Werkzeugspindelanordnung nach Anspruch 1, **dadurch gekennzeichnet, dass** das Antriebsteil (16) einen in eine Schaftaufnahme (13) der Werkzeugspindel (10) einsetzbaren und dort fixierbaren Schaft (14) besitzt.

3. Werkzeugspindelanordnung nach Anspruch 1 oder 2, **dadurch gekennzeichnet, dass** das Antriebsteil (16) einen Bestandteil des Drehrevolvers (17) bildet, wobei die Verschiebung des Antriebsteils (16) gegen den übrigen Bereich des Drehrevolvers (17) gegen die Kraft von Federmitteln (24) erfolgt.

4. Werkzeugspindelanordnung nach einem der vorhergehenden Ansprüche, **dadurch gekennzeichnet, dass** ein formschlüssig das Antriebsteil (16) umgreifender und daran axial verschiebbarer Mitnehmer (20), der insbesondere als Mitnahmescheibe ausgebildet ist, mit einem Hauptteil (19) des Drehrevolvers (17) starr verbunden ist.

5. Werkzeugspindelanordnung nach einem der vorhergehenden Ansprüche, **dadurch gekennzeichnet, dass** das als Stellzylinder, insbesondere hydraulischer Stellzylinder, ausgebildete Stellglied (29) im Spindelgehäuse (12) und/oder einem starr damit verbundenen Teil (38) angeordnet ist, wobei ein am freien Ende der wenigstens einen Kolbenstange (32) des wenigstens einen Stellglieds (29) angeordnetes Kopfteil (35) in einem Ringkanal (34) des Drehrevolvers (17) bei einer Drehbewegung desselben bewegbar ist und die Ebene des Ringkanals (34) senkrecht zur Drehachse der Werkzeugspindel (10) ausgerichtet ist.

6. Werkzeugspindelanordnung nach Anspruch 5, **dadurch gekennzeichnet, dass** die Kolbenstange (32) über einen Ringschlitz (33) in den Ringkanal (34) eingreift, wobei die Schlitzbreite des Ringschlitzes (33) kleiner als der Durchmesser des Kopfteils (35) ist.

7. Werkzeugspindelanordnung nach einem der vorhergehenden Ansprüche, **dadurch gekennzeichnet, dass** die Drehverzahnung (42, 43) aus wenigstens einem stirnseitigen Vorsprung (42) am Spindelgehäuse (12) oder an einem dem Spindelgehäuse (12) zugewandten Bereich des Drehrevolvers (17) besteht, der zum wahlweisen Eingriff in mehrere entsprechende Ausnehmungen (43) am gegenüberliegenden anderen Teil ausgebildet ist, die im entsprechenden radialen Abstand angeordnet sind, wobei der Vorsprung (42) vorzugsweise als Passfeder ausgebildet ist.

8. Werkzeugspindelanordnung nach Anspruch 7, **dadurch gekennzeichnet, dass** die Zahl und Winkelanordnung der Ausnehmungen (43) der Zahl und Winkelanordnung der Drehmeißelbefestigungen oder Drehmeißel (18) am Drehrevolver (18) entspricht.

9. Werkzeugspindelanordnung nach einem der vorhergehenden Ansprüche, **dadurch gekennzeichnet, dass** sich der Drehrevolver (17) wenigstens in der Einrückstellung des wenigstens einen Stellglieds (29) radial und axial am Spindelgehäuse (12) und/oder einem damit starr verbundenen Teil (38) abstützt.

10. Werkzeugspindelanordnung nach Anspruch 9, **dadurch gekennzeichnet, dass** ein rohrartiger Fortsatz (40) des Drehrevolvers (17) das Spindelgehäuse (12) oder das damit starr verbundene Teil (38) übergreift.

11. Werkzeugspindelanordnung nach einem der vorhergehenden Ansprüche, **dadurch gekennzeichnet, dass** die Mündung wenigstens einer axialen Kühlmittelleitung (44) im Spindelgehäuse (12) in der Einrückstellung des wenigstens einen Stellglieds (29) an der Mündung wenigstens einer axialen Kühlmittelleitung (45) im Drehrevolver (17) anliegt.
